# EUROPEAN PATENT APPLICATION

(11) **EP 4 660 595 A1**
(43) Date of publication of application: **10.12.2025**
(21) Application number: 25180733.5
(22) Date of filing: 04.06.2025
(51) Int. Cl.: G01G 17/00, G01G 21/30

(54) **WEIGHING DEVICE FOR PROCESS ENVIRONMENTS WITH STRONG PRESSURE AND/OR TEMPERATURE VARIATIONS**

(30) Priority: 05.06.2024 IT 202400012847
(71) Applicant: Phizero S.r.l., 48018 Faenza (RA) (IT)
(72) Inventor: MAZZOTTI, Gabriele, 48018 FAENZA (RA) (IT); MAZZOTTI, Pier Paolo, 48018 FAENZA (RA) (IT)
(74) Representative: Fabbriciani, Simone

(57) **Abstract**

Described is a weighing device (1, 1', 1'', 1‴) for process environments with a high pressure and/or temperature variation, particularly for environments which can be sterilised by superheated steam or with vacuum hydrogen peroxide, which comprises a box-shaped body (3), immersed in a compensation chamber (CC), and which has inside it a containment chamber (30) for the weighing instruments (31). Connected to the instruments (31) there is a weighing plate (2) integral with a spacer (21). The spacer (21) extends along a vertical direction (Z) and supports the object to be weighed. The plate (2) is suitable for operating in a process chamber (CP) which can be sterilised and hermetically separated from the compensation chamber (CC). There are also access and sealing means for the containment chamber (30), movable between an open position and a closed position: in the open position, the containment chamber (30) communicates with the outside, in the closed position, the containment chamber (30) is isolated relative to the process chamber (CP). There are also injectors (4, 41, 41', 41", 41"') of a flow entering the containment chamber (30) for cooling said instruments (31) and ejectors (5, 50, 51, 51', 51'', 51‴) of a flow coming out of the containment chamber (30) for controlling the internal pressure.

The invention also relates to a process for weighing sterile elements with the device (1, 1', 1", 1‴) according to the invention.

## Description

This invention relates to a weighing device for process environments with a high pressure and/or temperature variation, in particular for use in zones or sectors which can be sterilised by superheated steam or with vacuum hydrogen peroxide.

These sterilised zones and sectors are used for filling and closing primary aseptic containers, by means of a process suitable for sterile pharmaceutical items (injectable products, ophthalmics, etc.), such as bottles, syringes and carpules, which are used as primary containers for manufacturing and distributing parenteral pharmaceutical items. The invention also relates to a process for weighing sterile elements with the weighing device according to the invention inside process environments with a high pressure and/or temperature variation, in particular in environments which can be sterilised by superheated steam or with vacuum hydrogen peroxide.

In general, the process of filling and finishing containers such as bottles, vials, syringes and carpules, known as "fill-finish", is crucial in the production of drugs, especially for injectable ones. The main challenge is to maintain the sterility of the product during this delicate phase. Unlike terminal sterilisation, where the drug is treated in closed containers, the "aseptic fill-finish" involves the risk of losing sterility, since the drug is dispensed in open containers. For this reason, in order to ensure sterility, it is essential that the filling and finishing are carried out in specially designed environments to prevent contamination.

The national and international pharmaceutical guidelines establish strict requirements for the qualification and production of machinery used in this process. The production in an aseptic environment requires particular care, and the regulations require monitoring methods to ensure sterility and prevent particle and microbiological contamination during the filling and finishing of the containers.

The aseptic filling and finishing, known as "fill-finish", currently occurs inside systems with redistricted access barriers (RABS) or isolators. These apparatuses create a confined environment for the filling and sealing of the containers, often integrating with automatic filling machines. The legislation imposes strict particle and microbiological requirements in these areas, with strict limits for non-viable particles both at rest and during the cycle and requiring a total absence of microbiological contamination.

The filling machines integrated into RABS or isolators must handle both parts in direct and indirect contact, adopting special measures to prevent contamination of the sterile product. The isolators can be closed or opened, with a mouse-hole for the extraction, designed to minimise the risk of contamination while performing fill-finish processes inside them. They incorporate ventilation chambers with HEPA filtration (high efficiency particulate air system) and HVAC systems (heating, ventilation and air conditioning) to maintain controlled environmental conditions.

These insulators, similar to small "white rooms", are constructed with materials certified for aseptic areas, such as stainless steels or plastic, and are subject to a rigorous qualification. The air inside isolators is filtered to reduce the amount and size of the dispersed particulate, and decontamination systems, often based on vaporised hydrogen peroxide, are used before production to reduce microbiological charge. The meticulous design allows for effective cleaning and sanitising.

The current aseptic filling and finishing process, although advanced, has some critical aspects. The main technique used for reducing the microbiological charge is the hydrogen peroxide or vaporised hydrogen (VPHP or VHP) generator, which is considered essential for achieving the aseptic condition. However, this method is defined as "decontamination" and not "sterilisation" and shows significant limitations with respect to systems such as steam sterilisation, ionizing radiation, or chemical sterilisation with ethylene oxide (ETO).

The VHP develops a surface action, but has low penetration, strongly depends on the previous surface cleaning process and is difficult to control; in fact, even light films of accumulated residual substances can adversely affect the effectiveness of the process. In addition, VHP residues may compromise the pharmaceutical specialty; therefore, adequate removal of any residues from the indirect contact areas must also be ensured. This limitation makes VHP unsuitable for sterilising the parts in direct contact with pharmaceutical products and is commonly only accepted for the indirect contact surfaces in the filling and closing machines. As a result, these parts must be disassembled and steam sterilised separately, resulting in high production times and additional costs.

The transfer of sterilised parts inside the isolator, normally at a lower sterility level, involves the risk of losing the sterility during contact with air or handling. Complicated and risky methods, such as the use of "Rapid Transfer Port" (RTP) or the transfer and assembly by means of the isolator gloves, are used to maintain sterility, but are subject to residual contact risks, procedural errors and violations of the "first air" criterion in the aseptic area.

The situation becomes particularly critical for large components, such as vibrating cups and hoppers, which are sterilised in autoclaves, but because of the size they cannot be handled with gloves with the doors closed, thereby compromising the sterile safety. In conclusion, the current system represents a mitigated risk but not completely safe from the point of view of sterility.

Italian patent application No. 102023000024198, filed in the name of the same Applicant, describes a double-container system, both of which can be sterilised by superheated steam, which - by means of an automatic and autonomous process for sterilising the process instruments - greatly limits or eliminates the need for intervention by the operator during normal operation of the system, without a supporting autoclave or gloves, since there are no preparation operations in an aseptic condition.

In a container of the system, in particular in the process chamber of the first container, the bottles or syringes are meticulously weighed before and after they are filled, in order to satisfy the process tolerances.

The process of weighing medical ampoules before and after filling them is essential to ensure that each ampoule contains the correct quantity of medicine. For this reason, the weighing step is extremely delicate, since just a few variations in weight compared with that requested by the customer could adversely affect the effectiveness of the medicine, exposing the patient to even serious risks.

Before starting the weighing process, the weighing scales are calibrated to ensure the accuracy of the measurements. This step is crucial in order to obtain accurate results.

Each ampoule is therefore placed accurately on the weighing scales and its weight is measured.

The weight of each ampoule is compared with the weight measured after filling, which is determined from the specific quantity of the medicine it contains. If the weight of the ampoule is within certain predetermined limits, it is considered to conform.

If an ampoule does not meet the weight requirements, corrective actions may be taken, such as adding or removing minimum quantities of medicinal product in all subsequent fillings.

Once the ampoules have been weighed and checked empty and full, they are capped.

All the information related to the weighing process, including the weight data of each ampoule, is accurately recorded for traceability and regulatory compliance purposes.

In some cases, verification checks may be carried out to ensure that the weighing process has been performed correctly and that all vials meet the required quality standards.

Due to the high temperatures present during the superheated steam sterilising step and also due to the sudden pressure variation which occur between the process chamber and the compensation area, where, on the other hand, the instrumentation of the weighing scales is positioned, it is necessary to implement a solution which safeguards the integrity and the functionality of the weighing scales.

The aim of the invention is to overcome the above-mentioned drawbacks and to make a weighing device for process environments with a high variation in pressure and/or temperature, particularly for use in environments which can be sterilised by superheated steam or with vacuum hydrogen peroxide, which is reliable and precise.

In the context of the above-mentioned purpose, an aim of the invention is to provide a weighing device for process environments with a high pressure variation, particularly for use in environments which can be sterilised by superheated steam or with vacuum hydrogen peroxide which does not expose the parts and products to contamination which must remain sterile during the entire requested process.

Yet another aim of the invention is to provide a weighing device for process environments with a high variation in pressure and/or temperature, particularly for use in environments which can be sterilised by superheated steam or with vacuum hydrogen peroxide which, whilst guaranteeing the maximum precision, reliability and sterility, is also economically competitive. This purpose, as well as these and other aims, which are described in more detail below, are achieved, according to the invention, comprising the technical features described in one or more of the appended claims. The dependent claims correspond to possible different embodiments of the invention.

In particular, according to a first aspect, this invention relates to a weighing device for process environments with a high variation in pressure and/or temperature, particularly for use in environments which can be sterilised by superheated steam or with vacuum hydrogen peroxide which comprises a weighing plate for the object to be weighed (before and/or after its filling) which can operate in a sterilisable process chamber.

The plate is positioned on an access opening inside a box-shaped body which defines the space of the weighing device and is connected to a load cell located inside the box-shaped body. There is also a spacer for supporting the elements to be weighed which extends along a vertical direction, preferably normal to the ground. The box-shaped body, unlike the plate, is immersed in a compensation chamber.

The two chambers, the process chamber and the compensation chamber are hermetically separated during the sterilising step.

The process chamber and the compensation chamber operate at different temperatures (approximately 120°C and 20°C, respectively) and pressures. The box-shaped body forms, inside it, a containment chamber for the weighing instruments (mechanical and electronic); the containment chamber constitutes, by its nature, a third environment which is different due to temperatures and pressures compared with the other two.

There are means for access to and sealing the containment chamber, positioned on a neck which protrudes from the box-shaped body, movable between an open position, in which the containment chamber may communicate with the process chamber, and a closed position, in which the containment chamber is completely isolated relative to the process chamber (CP).

The injectors (or injector means) introduce a flow entering the containment chamber, in such a way as to cool the weighing instruments inside the containment chamber.

The flow which enters is advantageously almost constant and uniform in flow rate between a minimum value of 5 NI/min, below which there is not a sufficient cooling action, and a maximum value of 10 NI/min, above which the weighing instruments could be damaged.

The Applicant has therefore overcome the technical problem of how to safeguard the instruments, and in particular the electronics inside the weighing device, when there are parts exposed to high temperatures and to significant pressure gradients, by maintaining constant the temperature of the base of the weighing device, control of the flows entering and leaving the box-shaped body, as well as monitoring temperatures and pressures.

Advantageously, the injectors comprise a system of air infeed valves interconnected with each other and connected to the containment chamber by means of an inlet duct for conveying the flow entering from the outside. Also provided are ejectors (or ejector means) of a flow coming out of the containment chamber to control the pressure inside it.

Similarly, the ejector means comprise a system of valves for discharging air, interconnected with each other, from the inside of the containment chamber and a respective outlet duct for the outfeed flow which, advantageously, must have a variable flow rate depending on the predetermined pressure difference which must be kept in the containment chamber.

In other words, so that the pressure difference between the process chamber, which is empty (approximately 0 bar) and the pressure of the containment chamber does not exceed 50 millibars and does not cause damage to the weighing instruments positioned inside, air is made to escape from the containment chamber to maintain a pressure inside the containment chamber which is almost constant and at a predetermined value, for example 2 millibars.

The Applicant has also noted that the thermal difference of the portion of box-shaped body close to the process chamber, that is to say, the neck and the plate of the weighing device, and the supporting part of the box-shaped body on the ground, inside the compensation chamber, causes different thermal expansions.

In order to prevent the different deformation of the box-shaped body from causing breakage or damage to the structure of the box-shaped body, the Applicant has provided for isostatically constraining the box-shaped body to the separation baffle between the process chamber and the compensation chamber.

In practice, the box-shaped body is advantageously rested on a thermostat plate (which helps the cooling) by means of flexible joints suitable for allowing the box-shaped body to follow the deformations of the separation baffle between the process chamber and the compensation chamber.

Advantageously, in order to prevent any bending of the parts of the structure exposed to the high temperature excursion from adversely affecting the good operation of the device, the Applicant has conceived the flexible joints with a system of connecting rods positioned at the opposite sides of the box-shaped body. The connecting rods, for example four positioned in pairs on the short (opposite) sides of the box-shaped body, are all fixed to the thermostat plate by the respective ends. On the opposite side of the box-shaped body relative to the thermostat plate, above the ground, they are connected to the separation baffle between the process chamber and the compensation chamber.

Moreover, the system of connecting rods comprises an axial centring defined on the baffle, coaxial with the load cell plate.

Each connecting rod is also suitable for rotating about a respective pair of spherical supports: a first spherical support positioned substantially at the plane defined by the thermostat plate, and a second spherical support positioned substantially at the plane defined by the separation baffle.

The two connecting rods positioned on each of the two sides of the box-shaped body have the respective pairs of spherical supports, which are obliquely positioned relative to each other. That is to say, a connecting rod is configured in such a way that the centre of the first spherical support and of the second spherical support are substantially aligned relative to the vertical direction Z, whilst the other connecting rod has the centre of the first spherical support and of the second spherical support positioned obliquely relative to the vertical direction.

The straight lines which pass through the centres of each pair of spherical supports converge, in practice, at a point of the vertical direction.

In this way, the inclination of a few degrees of one of the two connecting rods allows the moving away of the points of singularity which, otherwise, when they are very close to the deformation point, could generate a misalignment of the structure.

Therefore, after maintaining the temperature constant of the base of the weighing device, the Applicant has reached the isostatic condition of the support.

Another distinctive feature of the invention is due to the presence of a unit for managing and controlling the movement of the plate from the open position to the closed position, and vice versa, of the injectors for introducing the flow entering the containment chamber, and the ejectors for discharging air from the containment chamber depending on the predetermined pressure to be maintained.

Another aspect of the invention is given by the process for weighing sterile elements with the weighing device according to this invention, for process environments with a high variation in pressure and/or temperature, particularly for environments which can be sterilised by superheated steam or with vacuum hydrogen peroxide.

The process comprises - on the one hand - introducing, by means of the injectors, a substantially constant flow of air entering the containment chamber in such a way as to cool the instruments, and - on the other hand - extracting, by means of ejectors, a flow coming from the containment chamber, in such a way as to maintain the pressure differential inside the containment chamber relative to the process chamber at a predetermined value and advantageously less than 50 millibars.

Preferably, during the step of washing or injecting superheated steam in the process chamber, the movable membrane is brought to a closed position on the box-shaped body, in such a way as to isolate the containment chamber (from the process chamber). The superheated steam is then introduced into the process chamber, in such a way as to make the atmosphere inside it sterile, and then the membrane is brought to the open position, relative to the box-shaped body, so as to allow the containment chamber to communicate with the process chamber.

The Applicant has also noted that the configuration of the weighing device according to the invention is advantageous during the sterilisation with the superheated steam of the process chamber, where the bottles, syringes, carpules or sterile elements are filled (and subsequently closed).

In fact, this sterilisation occurs by compensating the vacuum and the pressure in the process chamber, in such a way as to avoid damage to the mechanical parts of the apparatuses in the compensation chambers and creating a sterile island around the filling zone of these sterile elements.

Specifically, superheated steam is injected into the vacuum process chamber with alternating vacuum-steam cycles until suitable temperature sensors located in the proximity of the system valves detect a predetermined sterilisation temperature. Therefore, compressed air is injected into the compensation chamber with alternating vacuum-compressed air cycles keeping the pressure differential between the compensation chamber and the process chamber below the structural limit identified (typically approximately 10 mbar), to avoid damage to the process apparatuses.

After having injected superheated steam into the vacuum process chamber, the process can again be carried out in a vacuum and then superheated steam can be injected again. This process is repeated cyclically until the process chamber is gradually and completely saturated.

In this case, the possibility of having injectors and ejectors separate and independent from each other for the containment chamber of the weighing device is well suited to the environment in which the device is intended to be immersed.

Further features and advantages of the invention are more apparent in the detailed description below, with reference to a preferred, non-limiting embodiment of the superheated steam sterilisable container illustrated by way of example and without limiting the scope of the invention, with the aid of the accompanying drawings, in which:

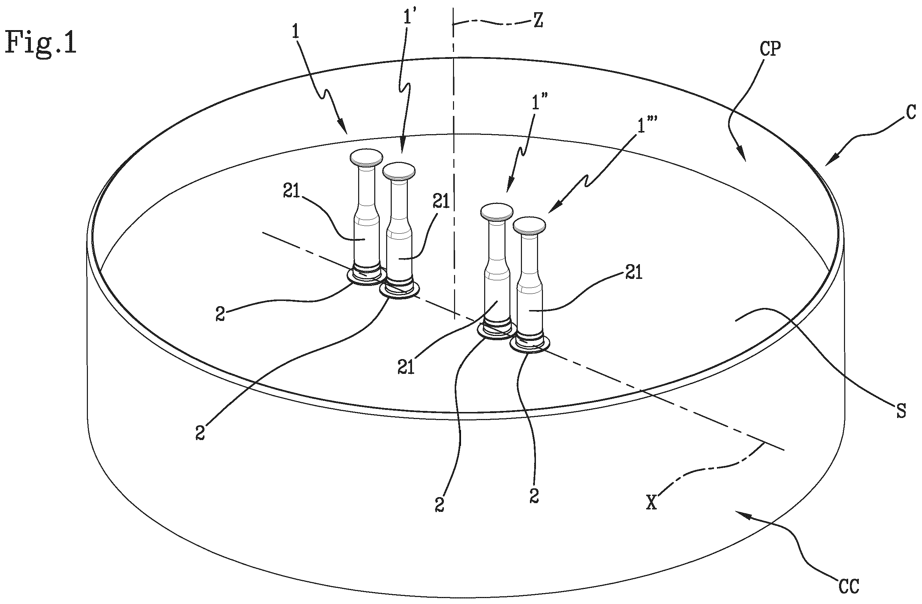

Figure 1 is a perspective view of four devices 1, 1', 1" and 1‴, inside a container C which can be sterilised by superheated steam, having a process chamber CP suitable for being sterilised by superheated steam and a compensation chamber CC, with compensated pressure.
Figure 2 shows the container C and the devices 1, 1', 1" and 1‴ of Figure 1, all cross-sectioned with a plane passing through the vertical direction Z;
Figure 3 shows a first cross section of two devices 1 and 1' directed along the longitudinal alignment direction X of devices 1, 1', 1" and 1‴;

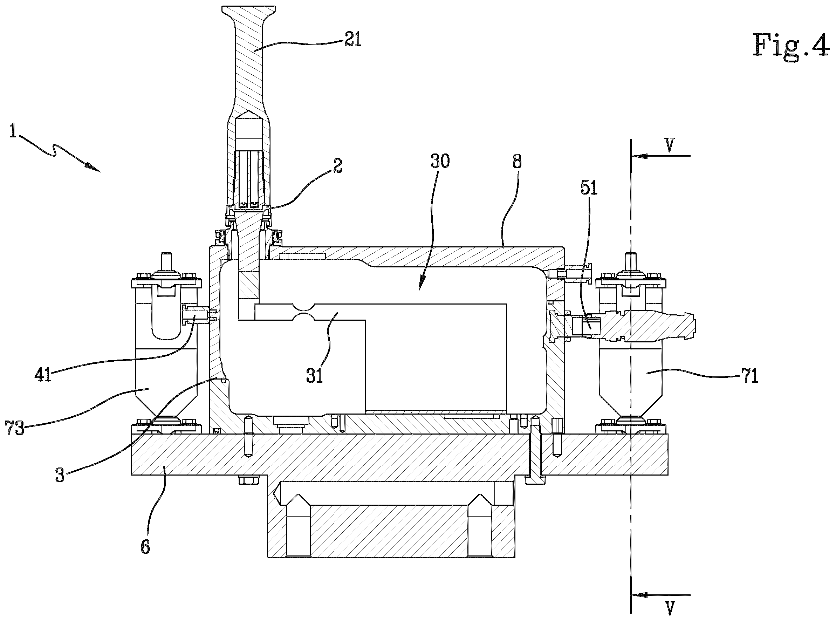

Figure 4 is a cross-section through line IV-IV of the two devices 1 and 1' of Figure 3;
Figures 5A and 5B show the cross-section V-V of the device 1 and 1' of Figure 4, respectively;
Figure 6 schematically illustrates the configuration of the injectors and ejectors of the devices 1, 1', 1" and 1‴.

The above-mentioned drawings show a preferred embodiment of a container, according to the invention, which is denoted in its entirety with the numerals 1, 1', 1" or 1‴ for weighing for environments with a high variation in pressure and/or temperature, particularly for environments which can be sterilised by superheated steam or with vacuum hydrogen peroxide, which comprises a plate 2 which, by means of a load cell (not illustrated) positioned inside the box-shaped body 3, can weigh an object, such as a bottle for medical use. The plate 2 is connected to a spacer 21, extending along a vertical direction Z, for supporting the object to be weighed. The plate 2 is designed to operate in a process chamber CP which can be sterilised by superheated steam.

The embodiment described here shows four devices 1, 1', 1" and 1‴ all identical to each other and aligned along a longitudinal direction X; for this reason, the description of one of the devices is to be understood as valid for the others.

A unit has also been conceived for management and control of the movement which supervises and controls all the parts of each device 1, 1', 1" and 1‴ as well as the interconnected coordinates.

The plate is connected to a box-shaped body 3, immersed in a compensation chamber CC, with compensated pressure, for housing the apparatuses. Internally, the box-shaped body 3 receives a containment chamber 30 for the weighing instruments 31.

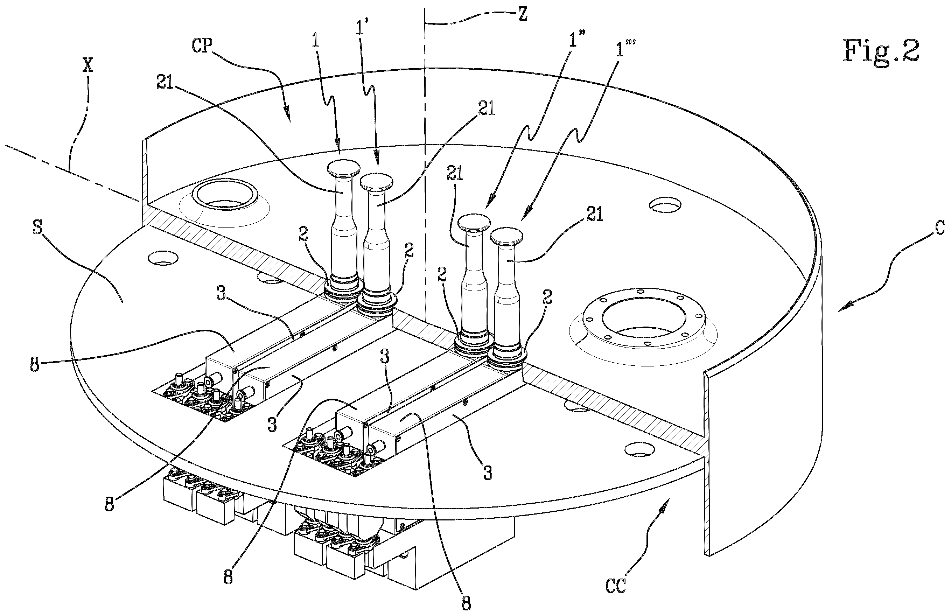

The process chamber CP, suitable for being sterilised by superheated steam, and the compensation chamber CC, with compensated pressure, are formed inside a container C which can be sterilised by superheated steam, and are separated from each other by a hermetic partition S lying on a horizontal plane substantially normal to the vertical direction Z (Figure 2). There are also access and sealing means for the containment chamber 30, such as a membrane (not illustrated) movable between an open position, in which the containment chamber 30 communicates with the outside, and a closed position, in which the containment chamber 30 is isolated from the outside.

There are injector means for a flow (of air) entering the containment chamber 30 for cooling the instruments 31, as well as ejector means for a flow (of air) coming out of the containment chamber 30 for controlling the internal pressure.

The injectors comprise a system of air infeed valves 4, connected inside the containment chamber 30 by means of an inlet duct 41, 41', 41", 41‴ for the flow entering from the outside.

The incoming flow has a predetermined constant flow rate, for example equal to 10 NI/min, or in any case not greater than that flow rate, at a pressure of approximately 6 bar.

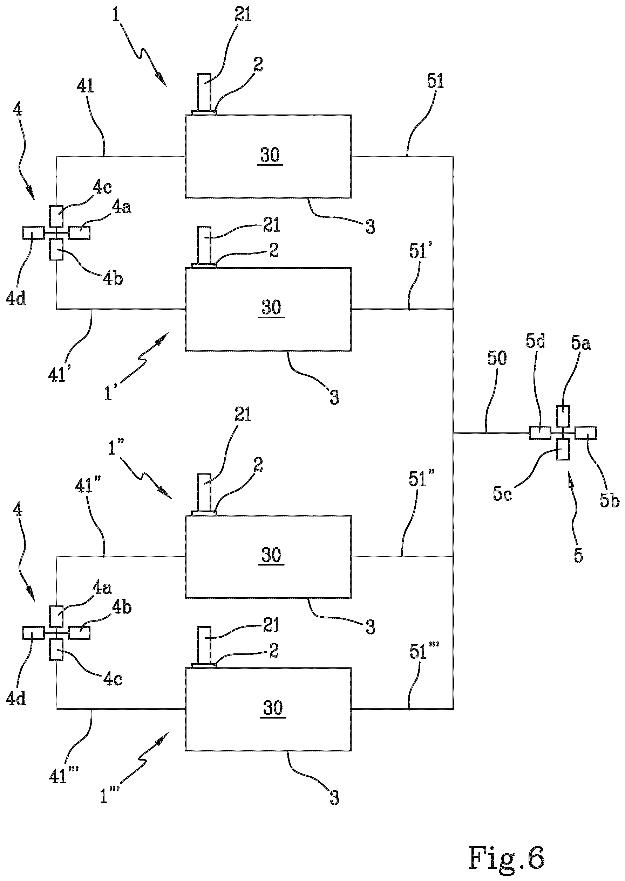

With reference to the diagram in Figure 6, the system of valves 4 comprises four inlet valves 4a, 4b, 4c, 4d interconnected, positioned symmetrically, and connected to inlet ducts 41, 41', 41", 41‴, each relating to the relative device 1, 1', 1", 1‴.

According to the embodiment described here, the work of each system of valves for two ducts is divided and, therefore, having provided four devices 1, 1', 1", 1‴, two "twin" systems of valves 4 will be necessary, each for feeding two different ducts: 41, 41' and 41", 41‴.

The ejectors comprise a system of valves 5 for discharging air from the inside of the containment chamber 30, by means of an outlet duct for the outfeed flow.

The outfeed flow has a variable flow rate depending on the predetermined pressure difference which must be maintained in the containment chamber 30.

In other words, once the maximum pressure difference required in the containment chamber 30 has been established, for example 2 millibars, the movement management and control unit consequently calculates the outfeed to be expelled from each device 1, 1', 1" and 1‴.

Unlike the injector means, the system of outlet valves 5, which comprises emission valves 5a, 5b, 5c, 5d interconnected and connected to all outlet ducts 51, 51', 51", 51‴ by means of a connecting pipe 50, is single: the four emission valves 5a, 5b, 5c, 5d symmetrically connected to each other, are connected downstream of a single pipe 50 supplied by the outlet ducts 51, 51', 51", 51‴ coming from the corresponding device 1, 1', 1", 1‴.

The pressure in the pipe 50 will be the reference pressure for the outflow of air.

As regards the flexible joints, they are made by positioning four connecting rods 71, 72, 73, 74 positioned, in pairs, at the opposite sides of the box-shaped body 3.

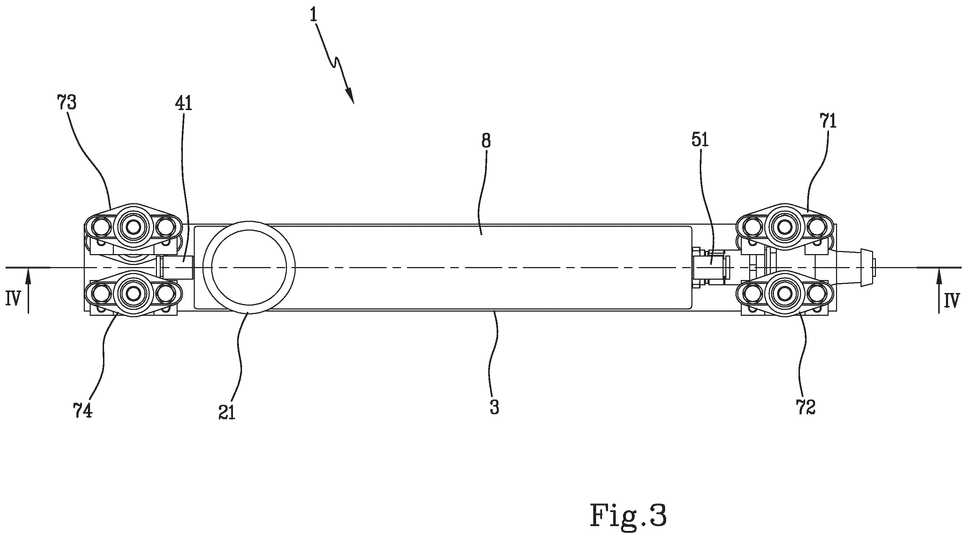

Each connecting rod 71, 72, 73, 74 is fixed, at one end, to the thermostat plate 6 and, at the other end, to the separation baffle S and, consequently, it is positioned on the opposite side of the box-shaped body 3 relative to the thermostat plate 6 (Figure 3).

The separation baffle S is intended to be immersed in the process chamber CP (acting as a base for the process chamber CP) and will therefore have a significant thermal deformation.

The system of flexible joints is completed by an axial centring defined on the upper plane of the plate 2, the one intended to be in contact with the spacer 21, at its geometrical centre.

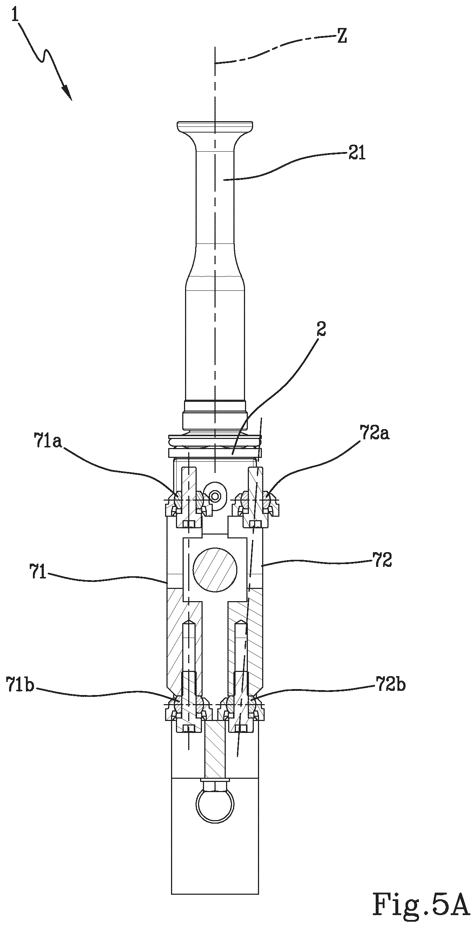

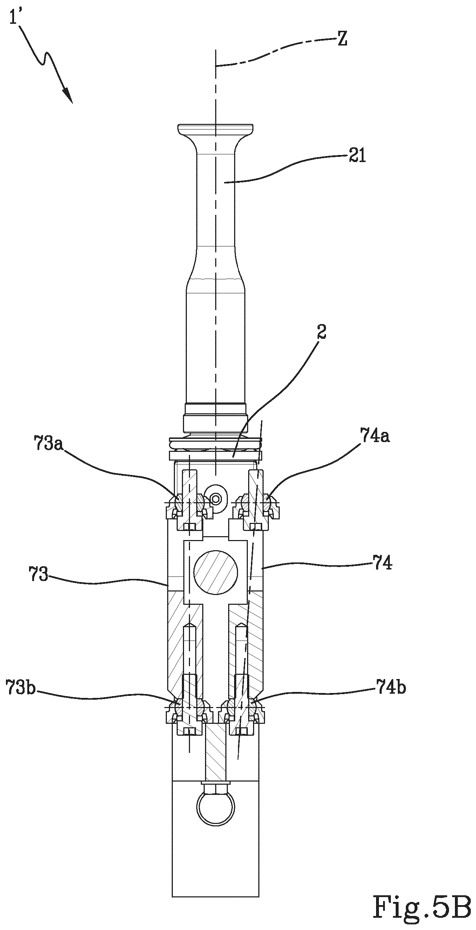

For this reason, with reference to Figures 5A and 5B, each of the connecting rods 71, 72, 73, 74 will be able to rotate about a respective pair of spherical supports 71a, 71b, 72a, 72b, 73a, 73b, 74a, 74b. Each pair of spherical supports 71a and 71b, 72a and 72b, 73a and 73b, 74a and 74b is formed by a first spherical support 71a, 72a, 73a, 74a (positioned substantially at the plane defined by the thermostat plate 6 and by a second spherical support 71b, 72b, 73b, 74b (positioned substantially at the plane defined by the separation baffle S).

For each side of the box-shaped body 3, the two connecting rods 71-72 and 73-74 have the relative pairs of spherical supports 71a-71b and 72a-72b obliquely positioned relative to each other. That is to say, there will be a connecting rod 71 with the centre of the first spherical support 71a and of the second spherical support 71b substantially aligned relative to the vertical direction Z and another connecting rod 72 with the centre of the first spherical support 72a and of the second spherical support 72b positioned obliquely relative to the vertical direction Z.

For weighing the sterile elements F using the device 1, 1', 1", 1‴ a constant incoming flow of air must be introduced by means of the injectors into the containment chamber 30, in such a way as to cool the instruments 31.

A flow of air coming out from the containment chamber 30 is extracted by means of the ejectors, so as to keep the pressure inside the containment chamber 30 at the predetermined value (however, below the pressure difference of 50 millibars relative to the process chamber).

The movable membrane is brought to the closed position on the box-shaped body 3, in such a way as to isolate the containment chamber 30. The superheated steam is introduced inside the process chamber CP, in such a way as to make the atmosphere inside it sterile, and the movable membrane is moved to the open position relative to the box-shaped body 3, to allow the containment chamber 30 to communicate with the outside.

From the above description it may be seen how the invention achieves the preset purpose and aims and in particular a weighing device is made for process environments with a high pressure variation, particularly for use in environments which can be sterilised by superheated steam or with vacuum hydrogen peroxide, which is able to work across two environments having very different temperature and pressure conditions.

In particular, the pressure control using the injector and ejector means allows the weighing device to not be affected by instrumentation (electromechanical) difficulties due to the considerable thermal and pressure difference.

Moreover, the system of flexible joints compensates for the mechanical deformations derived from the thermal excursion of the structure.

Another advantage of the invention is due to the fact that it is reliable and precise and does not expose the parts and the products which must remain sterile during the entire requested process.

The ease and constructional simplicity of this weighing device guarantee a high economic competitiveness.

The invention described can be modified and adapted in several ways without thereby departing from the scope of the inventive concept.

Moreover, all the details of the invention may be substituted by other technically equivalent elements.

In practice, the materials used, as well as the dimensions, may be of any type, depending on requirements, provided that they are consistent with their production purposes.

## Claims

1. A weighing device (1, 1', 1", 1‴) for process environments with a high pressure and/or temperature variation, particularly for environments which can be sterilised by superheated steam or with vacuum hydrogen peroxide, comprising:
a box-shaped body (3), immersed in a compensation chamber (CC), having inside it a containment chamber (30) for the weighing instruments (31);
a weighing plate (2) connected to the instruments (31) and integral with a spacer (21) extending along a vertical direction (Z) and for supporting the object to be weighed, the plate (2) being suitable for operating in a process chamber (CP) which can be sterilised and hermetically separated from the compensation chamber (CC);
access and sealing means for the containment chamber (30) movable between an open position, in which the containment chamber (30) communicates with the outside, and a closed position, in which the containment chamber (30) is isolated relative to the process chamber (CP);
injectors (4, 41, 41', 41", 41‴) of a flow entering the containment chamber (30) for cooling said instruments (31);
ejectors (5, 50, 51, 51', 51", 51‴) of a flow coming out of the containment chamber (30) for controlling the internal pressure.

2. The device (1, 1', 1", 1‴) according to claim 1, wherein the incoming flow has a predetermined constant flow rate;
preferably, the flow rate being not greater than 10 NI/min, more preferably the flow rate being between 5 NI/min and 10 NI/min, inclusive, even more preferably the flow rate being equal to 10 NI/min.

3. The device (1, 1', 1", 1‴) according to claim 2, wherein the ejectors (5, 50, 51, 51', 51", 51‴) comprise a system of valves (5) for discharging air from the inside of the containment chamber (30) by means of an outlet duct (50, 51, 51', 51", 51‴) for the outfeed flow;
the outfeed flow having a variable flow rate depending on the predetermined pressure difference which must be maintained in the containment chamber (30) relative to the process chamber (CP).

4. The device (1, 1', 1", 1‴) according to claim 1, wherein the box-shaped body (3) is mounted on a thermostat plate (6) by means of flexible joints (71, 72, 73, 74) suitable for allowing the box-shaped body (3) to follow the deformations of the separation baffle (S) between the process chamber (CP) and the compensation chamber (CC).

5. The device (1, 1', 1", 1‴) according to claim 4, wherein the flexible joints (71, 72, 73, 74) comprise:
four connecting rods (71, 72, 73, 74) positioned in pairs at opposite sides of the box-shaped body (3) and each fixed, at its ends, to the thermostat plate (6) and the separation baffle (S) between the compensation chamber (CC) and process chamber (CP) positioned on the opposite side of the box-shaped body (3) relative to the thermostat plate (6); and
an axial centring defined on the upper plane of the box-shaped body (3), at the axis of the weighing plate;
each of said connecting rods (71, 72 and 73, 74) being suitable for rotating about a respective pair of spherical supports (71a, 71b, 72a, 72b, 73a, 73b, 74a, 74b): a first spherical support (71a, 72a, 73a, 74a) positioned at the plane defined by the thermostat plate (6) and a second spherical support (71b, 72b, 73b, 74b) positioned at the plane defined by the separation baffle (S).

6. The device (1, 1', 1", 1‴) according to claim 5, wherein for each side of the box-shaped body (3) the two connecting rods (71, 72 and 73, 74) have the relative pairs of spherical supports (71a, 71b and 72a, 72b) positioned obliquely relative to each other: a connecting rod (71) with the centre of the first spherical support (71a) and of the second spherical support (71b) aligned with the vertical direction (Z); the other connecting rod (72) with the centre of the first spherical support (72a) and of the second spherical support (72b) positioned obliquely relative to the vertical direction (Z).

7. The device (1, 1', 1", 1‴) according to claim 1, comprising a unit for managing and controlling the movement of the access and sealing means, the injectors (4, 41, 41', 41", 41‴) and the ejectors (5, 50, 51, 51', 51", 51‴).

8. A process for weighing sterile elements with the weighing device (1, 1', 1", 1‴) for process environments with a high pressure variation, particularly for environments which can be sterilised by superheated steam or vacuum hydrogen peroxide, according to any one of claims 1 to 7, comprising the following steps:
- introducing, by means of injectors (4, 41, 41', 41", 41‴), a flow entering a containment chamber (30) for the weighing instruments (31), inside a box-shaped body (3) of the device (1, 1', 1", 1‴), in such a way as to cool said instruments (31), the flow entering being constant;
- extracting, by means of ejectors (5, 50, 51, 51', 51", 51‴), a flow coming out from the containment chamber (30) to maintain the differential between the internal pressure of the containment chamber (30) and the pressure of the process chamber (CP) at a predetermined value.

9. The process according to claim 8, comprising the steps of:
- moving access and sealing means for the containment chamber from an open position, in which the containment chamber (30) communicates with the outside, to a closed position of the box-shaped body (3), in such a way as to isolate the containment chamber (30); the plate (2) being for weighing the object to be weighed and operating in a process chamber (CP) which can be sterilised;
- introducing the superheated steam inside the process chamber (CP), in such a way as to make the atmosphere inside it sterile;
- moving the plate (2) to an open position relative to the box-shaped body (3), so as to allow the containment chamber (30) to communicate with the process chamber (CP).
